# EUROPÄISCHE PATENTSCHRIFT

(11) **EP 1 255 691 B1**
(45) Veröffentlichungstag und Bekanntmachung des Hinweises auf die Patenterteilung: **01.10.2003**
(21) Anmeldenummer: 01913638.1
(22) Anmeldetag: 15.02.2001
(51) Int. Cl.: C01B 3/00, F17C 11/00, B01J 20/32, B01J 20/20

(54) **FESTKÖRPER MIT POREN- BZW. KANALSTRUKTUREN ZUM SPEICHERN VON GASEN UND VERFAHREN ZUM HERSTELLEN DER FESTKÖRPER ZUR VERWENDUNG IN SPEICHEREINRICHTUNGEN**
SOLIDS WITH A POROUS OR DUCT-LIKE STRUCTURE FOR THE STORAGE OF GASES AND METHOD FOR THE PRODUCTION OF SOLIDS IN STORAGE DEVICES
SOLIDES A STRUCTURE A PORES ET A CANAUX POUR EMMAGASINER DES GAZ, ET PROCEDE DE PRODUCTION DES SOLIDES EN VUE D'UNE UTILISATION DANS DES DISPOSITIFS DE STOCKAGE

(30) Priorität: 19.02.2000 DE 10007544
(43) Veröffentlichungstag der Anmeldung: 13.11.2002
(73) Patentinhaber: Ludwig Bölkow Stiftung, 85521 Ottobrunn (DE)
(72) Erfinder: BÖLKOW, Ludwig, 82031 Grünwald (DE); KROY, Walter, 85521 Ottobrunn (DE)
(74) Vertreter: Frick, Gerhard, Dipl.-Ing.
(86) Internationale Anmeldenummer: DE0100562
(87) Internationale Veröffentlichungsnummer: WO01060737

(56) Entgegenhaltungen:
- EP-A- 0 448 302
- EP-A- 0 649 815
- EP-A- 0 978 313
- WO-A-97/07885
- WO-A-98/52880
- WO-A-99/22862
- GB-A- 1 204 353
- US-A- 4 732 887
- US-A- 5 385 876
- PATENT ABSTRACTS OF JAPAN vol. 015, no. 484 (C-0892), 9. Dezember 1991 (1991-12-09) & JP 03 208870 A (ORIENTAL SANGYO KK), 12. September 1991 (1991-09-12)

## Beschreibung

Die Erfindung bezieht sich auf einen Festkörper mit von außen zugänglichen Poren- bzw. Kanalstrukturen zum druckarmen Speichern von Gasen innerhalb der Poren bzw. Kanäle, deren Durchmesser im nm (=Nanometer) - Bereich liegen sowie auf ein Verfahren zum Herstellen der Festkörper zu deren Verwendung in Speichereinrichtungen.

Es ist allgemein bekannt, Gase in Druckbehältern oder auch in flüssiger Form zu speichern. Im Falle der Druckbehälter müssen entsprechend dimensionierte Behälterwandungen und gegebenenfalls -formen zur Anwendung kommen, wobei die Wandungen aus Sicherheitsgründen einen weit höheren Druck aushalten müssen, als er im regulären Betrieb auftritt. Üblicherweise wird hier mit Drücken bis 200 bar und auch darüber gearbeitet, was vergleichsweise schwere Behälter bedingt, die außerdem noch regelmäßig auf ihren Allgemeinzustand, vor allem aber auf ihre Dichtheit überprüft werden müssen.

Gase, die in flüssiger Form gespeichert werden, müssen je nach Phasendiagramm gekühlt werden, was aufwendige, doppelwandige Behälter mit einer geeigneten Wäremeisolation erfordert. Zusätzlich muß ein sicherheitstechnisch zuverlässiges System zum Abströmen des verdampfenden Gasanteiles und eine hohe Druckbeständigkeit der betreffenden Behälter realisiert werden.

In der DE-OS 27 36 505 wird beispielsweise ein Verfahren zum Zwischenlagern von Wasserstoff vorgeschlagen, wonach das Gas in einen ausgekleideten, druckfesten Behälter unter Druck eingebracht wird und dort an ein im Behälter befindliches, absorbierendes Mittel unter Wärmeentwicklung angelagert wird; die Wärme wird in ein geeignetes Zwischenmedium überführt, von wo aus sie zum Austreiben des Gases wieder entnommen werden kann. Der für das Einbetten des Gases vorteilhafte Stoff soll gleichzeitig faserig und porös sein; außerdem soll er natürlichen, synthetischen oder mineralischen Ursprungs sein.

Des weiteren ist bekannt, Zeolithe als Speicher für Gasmoleküle zu verwenden, da sie in ihren Poren stark adsorbierend wirken (siehe FAZ vom 19.01.2000).

Auch ist bekannt geworden, daß in Taiwan von einem Chemiker namens Kuan, Jiuh Lin ein Festkörper aus flachen, scheibchenförmigen Porphyrinmolekülen geschaffen wurde, der von parallelen hexagonalen Kanälen durchzogen ist (siehe "Angewandte Chemie" Band 111, Seite 2894).

In der Zeitschrift "J. Phys. Chem. B 1999, 103" Seiten 10572 - 10581 ist unter dem Titel "Further Studies of the Interaction of Hydrogen with Graphite Nanofibers" ein Artikel von Rodriguez u.a. erschienen, der sich mit der Wechselwirkung von Graphit mit Wasserstoff befaßt. Ausführlich wird eine Meßapparatur zum Ermitteln der Speicherfähigkeit des Materials beschrieben einschließlich der Ergebnisse an eigenen Proben. Wesentliches Ergebnis ist, daß die Poren des Graphits sehr dazu neigen, mit Wasserdampf zu "verunreinigen". Dies beeinflußt die Speicherfähigkeit des Materials erheblich in negativem Sinne.

Im "MRS BULLETIN" vom November 1999, Seiten 45 bis 49 ist unter dem Titel "Hydrogen Adsorption in Carbon Materials" ein Aufsatz von M.S. Dresselhaus u.a. erschienen, der eine Übersicht von wissenschafltichen Arbeiten an verschiedenen Graphit-Nanostrukturen zur Anlagerung von Wasserstoff zeigt, wie zum Beispiel an Nanoröhrchen, an Nano-Plättchen oder sogenannten "herringbone"-Strukturen. Es werden aktuelle Meßergebnisse gravimetrischer Wasserstoff-Speicherdichten mit den dazu gehörenden Temperaturen und Drücken angegeben.

Schließlich haben A.C. Dillon u.a. in einer Abhandlung unter dem Titel "CARBON NANOTUBE MATERIALS FOR HYDROGEN STORAGE", erschienen im Mai 4-6, 1999 im DOE/NREL Hydrogen Program Review die Entwicklungsziele und den Entwicklungsstand bei der Erforschung der Wassertoffspeicherung in nanoporösen Röhrchen aus Kohlenstoff (SWNTs) dargestellt. U.a. wird hier eine gravimetrische Wasserstoffspeicherdichte von 3,5 - 4,5 Gewichts-% bei Umgebungstemperatur und -druck angegeben.

Der Erfindung liegt die Aufgabe zugrunde, gemäß dem Oberbegriff des Patentanspruchs 1 einen Festkörper vorzuschlagen, in welchen Gase - hinsichtlich der Substanz des Festkörpers, seiner Herstellung sowie seiner Verwendung in entsprechenden Speichereinheiten - äußerst wirtschaftlich einbringbar und wieder entnehmbar sind.

Gelöst ist diese Aufgabe im wesentlichen durch den kennzeichnenden Teil des Patentanspruchs 1. Die weiteren Patentansprüche 2 bis 4 offenbaren vorteilhafte Ausgestaltungen des erfindungsgemäßen Festkörpers.

Ein wesentlicher Vorteil der Erfindung ist darin zu sehen, daß durch die Bindungsenergien von Gasen, die sich in den mikroporösen Poren- und in den mesoporösen Kanalstrukturen einlagern, hohe virtuelle Drücke von über 2000 bar erreichbar sind. Daher läßt sich eine große Zahl von Gasen bei deutlich niedrigeren Drücken weitestgehend ungefährlich kompakt speichern, was für viele technische Anwendungen von beachtlicher wirtschaftlicher Bedeutung ist.

Weiterhin bietet die Erfindung die Möglichkeit, chemische Reaktionen, die nach dem Massenwirkungsgesetz nur unter hohem Druck ablaufen, in dem erfindungsgemäßen Festkörper ohne Hochdruckbehälter zu realisieren. Die Poren- bzw. Kanalauskleidung kann so gewählt werden, daß sie gegebenenfalls eine notwendige Katalysatorwirkung ausübt.

Schließlich ist auch die Speicherung von Gasen als Kraftstoff, auch für Brennstoffzellen, in Einrichtungen mit Festkörpern gemäß der Erfindung möglich. Zusammen mit der Verwendung von Brennstoffzellen können solche Gasspeicher auch dazu eingesetzt werden, heutige mobile und stationäre elektrische Stromquellen zu ersetzen, z.B. in der Raumfahrt und in U-Booten. Auch an den Ersatz von Akkus und Trockenbatterien kann in dem vorliegenden Zusammenhang gedacht werden.

Gemäß den Patentansprüchen 5 - 3 wird ein Verfahren zur wirtschaftlichen Herstellung der erfindungsgemäßen Festkörper vorgeschlagen.

Das Verfahren zur Herstellung von Festkörpern gemäß der Erfindung setzt sich aus folgenden Schritten zusammen:
1. Anrühren eines Teiges aus einer keramischen Masse und polymeren Molekülen, Wasser, organischen Faserstoffen (Watte, Baumwolle etc.) und evtl. Karbonisierungskatalysatoren.
2. Formpressen und Zuschneiden des Teiges zu geeignet dimensionierten Formkörpem, z.B. zu Würfeln oder zu Quadern.
3. Aushärten der Formkörper durch Erhitzen (Wasserentzug), wobei Poren und Kanäle entstehen.
4. Umwandlung des Kohlenstoffs in Kohlenstoffmodifikationen mit möglichst hohem gasanlagerungsfähigem Anteil durch Thermolyse der organischen Moleküle in den Form- bzw. Festkörpern.

Die so erzeugten erfindungsgemäßen Festkörper können in beliebigen Gruppen zu beliebig größeren Einheiten zusammengefaßt werden, um in an sich bekannten, geschlossenen Speichereinheiten verwendet zu werden.

In den Abbildungen ist die Erfindung beispielsweise zeichnerisch erläutert.

Es zeigen:
- Fig. 1: einen Schnitt durch einen erfindungsgemäßen Formkörper.
- Fig. 2: einen Schnitt durch einen Festkörper nach der Erfindung.
- Fig. 3: einen Querschnitt durch eine Mikropore gemäß der Fig. 2.
- Fig. 4: eine gruppenweise Anordnung von beispielsweise sechzehn erfindungsgemäßen Festkörpern innerhalb einer Speichereinheit für Gase, zum Beispiel für Wasserstoff.
- Fig. 5: eine röntgenspektroskopische Aufnahme eines Silikat-Kohlenstoff-Hybrids.
- Fig. 6: eine Stickstoff-Isotherme eines Silikat-Kohlenstoff-Hybrids zur Veranschaulichung des Adsorptions- und Desorptionsvolumens für Stickstoff.

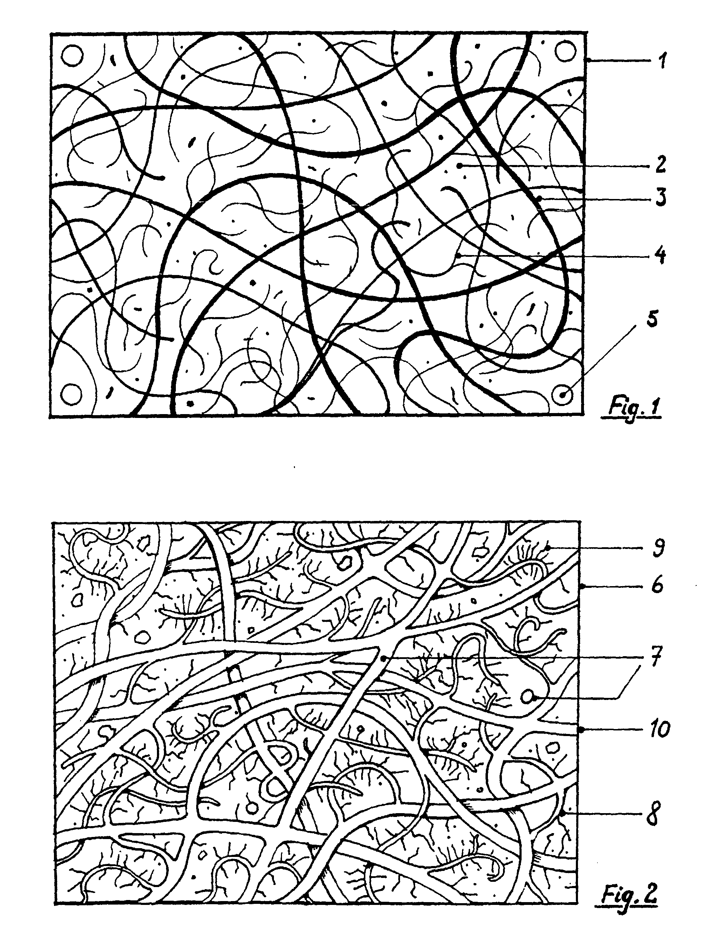

Der erfindungsgemäße Formkörper 1 gemäß der Fig. 1 besteht aus einer verkneteten keramischen Masse 2, in welche zuvor Polymere und Fasern 3 und z.B. Fadenproteine 4 eingerührt wurden. Die Bohrungen 5 sind vorgesehen für eine spätere Halterungsmöglichkeit der erfindungsgemäßen Festkörper (6) bei deren Zusammenfügen zu größeren Einheiten. Nachdem der Formkörper 1 der Fig. 1 gemäß dem auf der Seite -3-beschriebenen Verfahren mit den Schritten 1 - 4 unterzogen wurde, ergibt sich ein Festkörper 6 gemäß der Erfindung, wie in Fig. 2 ausschnittweise und vergrößert gezeigt.

Durch die Thermolyse des erfindungsgemäßen Verfahrens entstehen im Bereich der Polymere und Fasern 3 die Makrokanäle 7, aus den Fadenproteinen 4 die Mesoporen 8 sowie aus den Zuckermolekühlen die Mikroporen 9.

Das Innere der Körper 1 und 6 ist in den Figuren 1 und 2 sehr stark vergrößert und schematisch vereinfacht dargestellt, um das Wesen der Erfindung zu veranschaulichen. In Wirklichkeit liegen die Durchmesser der Makrokanäle 7 und der Mesoporen 8 im Mikrometerbereich und die Durchmesser der Mikroporen 9 im Nanometerbereich (siehe Patentanspruch 2). Außerdem ist die Zahl der Poren und der Kanäle in dem erfindungsgemäßen Festkörper (6) sehr viel größer als hier dargestellt werden kann. Die Fläche der Innenwände des gesamten Poren- und Kanalsystems 7 - 9 liegt bei einer Größenordnung von über 1000 m²/g Festkörpermasse.

Wie vor allem aus der Fig. 2 hervorgeht, ist das aus den Kanälen 8 gebildete System von außen über die offenen Zutritte 10 für das aufzunehmende Gas frei zugänglich. Die Makrokanäle 7 dienen dabei vorwiegend als sogenannte Transportkanäle, während die Mikroporen 9 vorwiegend als Speicher dienen.

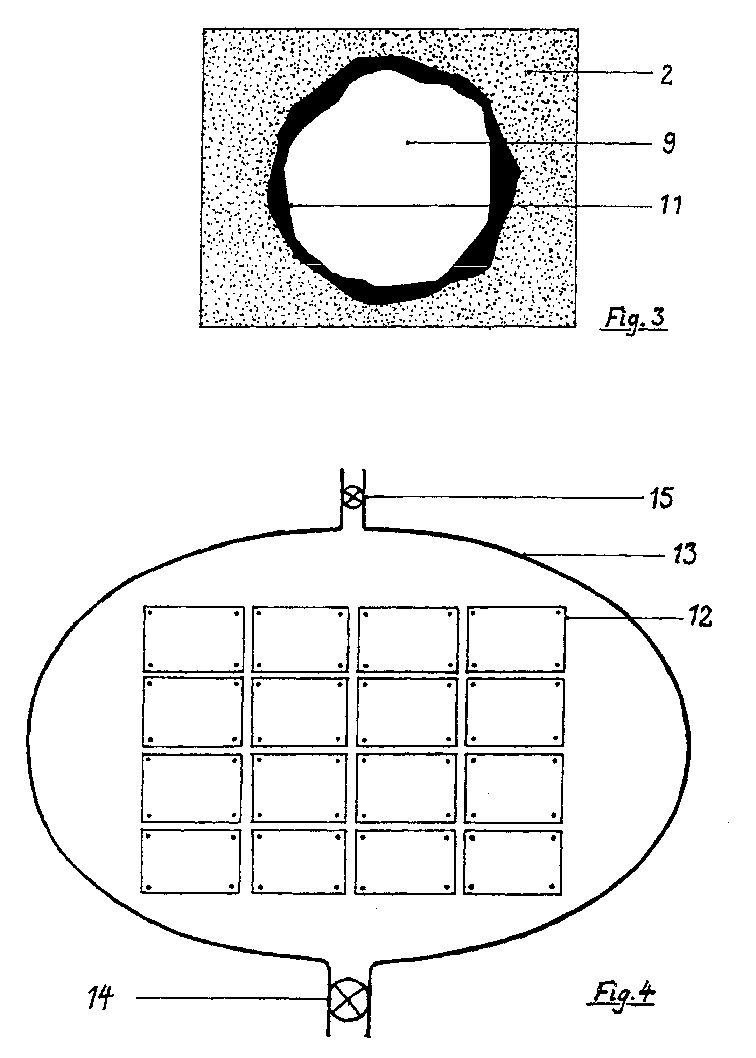

In der Fig. 3 ist beispielsweise eine Mikropore 9 in sehr starker Vergrößerung gezeigt. Ihre Wand ist nach der erfindungsgemäßen Thermolyse mit Kohlenstoff 11 beschichtet.

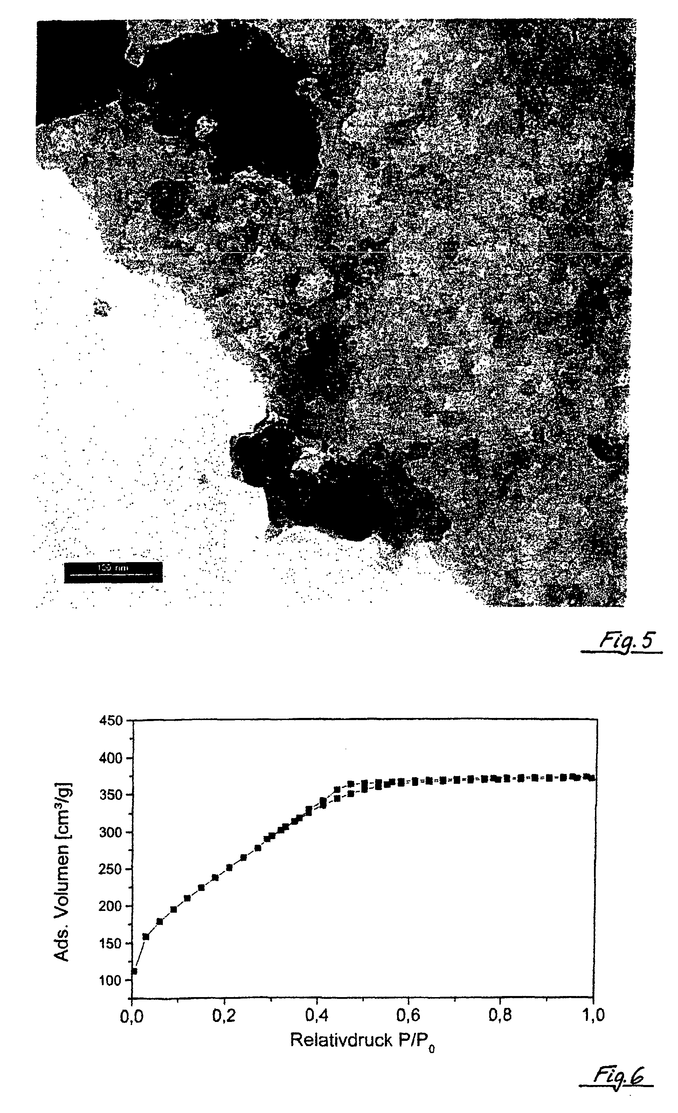

Gemäß Fig. 4 sind mehrere, hier sechzehn Festkörper 6 zu einer Gruppe 12 zusammengefaßt und innerhalb einer an sich bekannten geschlossenen Speichereinheit 13 angeordnet. Die Speichereinheit 13 besitzt ein Einlaßventil 14 sowie ein Auslaßventil 15 für das zu speichernde Gas, welches zum Beispiel Wasserstoff sein kann.

Die röntgenspektroskopische Aufnahme eines Silikat-Kohlenstoffhybrids gemäß Fig. 5 zeigt
a) die Nanostruktur
b) die homogene Struktur, und
c) den plättchenartigen Aufbau
des Materials.

Aus dem Diagramm gemäß Fig. 6 ist die Abhängigkeit vom Partialdruck und die Hysterese zwischen Adsorption und Desorption zu erkennen, die im Gegensatz zum Kohlenstoff-Grundmaterial, an welches der adsorbierte Stickstoff fest gebunden bleibt, die gemischt mikro- und mesoporöse Struktur des Silikat-Kohlenstoffverbundes erkennen läßt.

## Patentansprüche

1. Festkörper mit einer von außen zugänglichen Poren- bzw. Kanalstruktur zum druckarmen Speichern von Gasen innerhalb der Poren bzw. der Kanäle, deren Durchmesser im nm (Nanometer)-Bereich liegen, **dadurch gekennzeichnet , daß** der Festkörper (6) mit einer keramischen Masse (2) gebildet ist, und daß die Innenwände des Poren- und Kanalsystems (7 bis 9) mit Kohlenstoff als Reaktionsstoff beschichtet bzw. geformt sind, der bezüglich des jeweils zu speichernden Gases anlagerungsfähig ist, wobei die poröse Struktur des Festkörpers aus einer Kombination von speicherfähigen Mikroporen (9) mit Durchmessern im Bereich von 0,1 bis 3,0 nm sowie größeren Transportkanälen in Form von Mesokanälen (8) und Makrokanälen (7) besteht.

2. Festkörper nach Anspruch 1, **dadurch gekennzeichnet, daß** die Masse (2) des Festkörpers (6) zur Bildung des Poren- und Kanalsystems (7 bis 9) aus Silikat und Kohlenstoff besteht, mit einem Gewichtsanteil von mindestens 50% Kohlenstoffoder größeren Kohlenstoffanteilen.

3. Festkörper nach den Ansprüchen 1 und 2, **dadurch gekennzeichnet, daß** der Reaktionsstoff (11) noch andere Stoffe enthält, die seine Anlagerungsfähigkeit bezüglich der zu speichernden Gase verbessern.

4. Festkörper nach einem oder mehreren der Ansprüche 1 bis 3, **dadurch gekennzeichnet, daß** der Festkörper (6) noch andere Stoffe enthält, die seine elektrischen Eigenschaften, vor allem seine Leitfähigkeit verbessern.

5. Verfahren zur Herstellung eines Festkörpers nach einem oder mehren der Ansprüche 1 bis 4, **dadurch gekennzeichnet, daß** in eine handelsübliche keramische Masse (2), die beispielsweise aus Pulver aus Nanoteilchen, aus Schichtsilikat oder aus Tonmineralien besteht, Polymere (3) (z.B. Gelatine) und/oder Fadenproteine (4) manuell oder maschinell eingerührt und geknetet werden, daß die Masse (2) danach in geeignete Formen (1) gebracht und danach durch Flüssigkeitsentzug zur Bildung der Festkörper ( 6) getrocknet wird.

6. Verfahren nach Anspruch 5, **dadurch gekennzeichnet, daß** eine keramische Masse (2), bestehend aus Silikagel, Tonmineralien und Schichtsilikaten, bis zu einer Behandlungstemperatur von 400 Grad Celsius verwendet wird.

7. Verfahren nach Anspruch 5, **dadurch gekennzeichnet, daß** als keramische Masse (2) Ceroxid bei Behandlungstemperaturen bis 1800 Grad Celsius verwendet wird.

8. Verfahren nach einem oder mehreren der Ansprüche 6 und 7, **dadurch gekennzeichnet, daß** Zucker (Mono- und Disaccharide) und/oder Stärke und/oder Oligomere bzw. Polysaccharide als preiswerte Vertreter der Polymere verwendet werden.

9. Verfahren nach einem oder mehreren der Ansprüche 5 bis 8, **dadurch gekennzeichnet, daß** die Masse (2) zur Bildung der Transportkanäle (7, 8) makroskopische Fäden oder Fasern (organische, fadenförmige Moleküle und/oder Polymere bzw. Naturfasern oder naturähnliche Fasern ) beigemengt werden.

10. Verfahren nach einem oder mehreren der Ansprüche 5 bis 9, **dadurch gekennzeichnet, daß** die Formkörper (1) bzw. die Festkörper (6) durch Erhitzen (Brennen) gehärtet und gegebenenfalls karbonisiert werden.

11. Verfahren nach Anspruch 10, **dadurch gekennzeichnet, daß** durch weiteres Erhitzen die leichter flüchtigen Zersetzungsprodukte der Polymere sowie Restwasser aus den Festkörpern (6) ausgetrieben werden, wodurch sich das Poren- und Kanalsystem (7 bis 9) bildet, während die schwerflüchtige Komponente der Polymere in Form von Kohlenstoff zurückbleibt.

12. Verfahren nach einem oder mehreren der Ansprüche 5 bis 11, **dadurch gekennzeichnet, daß** beliebig viele Festköper (6) zu größeren Speichereinheiten (12) zusammengefaßt werden.

13. Verfahren nach Anspruch 5, **dadurch gekennzeichnet, daß** über den Durchmesser der in die Masse (2) einzurührenden Moleküle, über ihre Länge sowie ihre Vernetzung die Dimensionen der zu erzeugenden Kanäle (7) und Poren (8) entsprechend bestimmt werden.

## Claims

1. Solid body having a pore or channel structure accessible from the outside for the low-pressure storage of gases within the pores or the channels whose diameters are in the nm (nanometer) range, **characterized in that** the solid body (6) is formed by a ceramic composition (2) and **in that** the interior walls of the pore and channel system (7 to 9) are coated with or made from carbon as reactive material which is capable of adsorbing the gas to be stored in each case, where the porous structure of the solid body comprises a combination of micropores (9) which have diameters in the range from 0.1 to 3.0 nm and are capable of storage and larger transport channels in the form of mesochannels (8) and macrochannels (7).

2. Solid body according to Claim 1, **characterized in that** the ceramic composition (2) of the solid body (6) for the formation of the pore and channel system (7 to 9) comprises silicate and carbon and has a proportion by weight of at least 50% of carbon or a larger proportion of carbon.

3. Solid body according to Claim 1 or 2, **characterized in that** the reactive material (11) contains further materials which improve its ability to absorb the gases to be stored.

4. Solid body according to one or more of Claims 1 to 3, **characterized in that** the solid body (6) contains further materials which improve its electrical properties, especially its conductivity.

5. Process for producing a solid body according to one or more of Claims 1 to 4, **characterized in that** polymers (3) (e.g. gelatin) and/or thread proteins (4) are manually or mechanically stirred and kneaded into a commercial ceramic composition (2) which comprises, for example, powder made up of nanosize particles, sheet silicate or clay minerals, **in that** the ceramic composition (2) is then introduced into suitable moulds (1) and is then dried by removal of liquid to form the solid body (6).

6. Process according to Claim 5, **characterized in that** a ceramic composition (2) comprising silica gel, clay minerals and sheet silicates is used to a treatment temperature of 400° Celsius.

7. Process according to Claim 5, **characterized in that** cerium oxide is used as ceramic composition (2) at treatment temperatures of up to 1800° Celsius.

8. Process according to one or more of Claims 6 and 7, **characterized in that** sugar (monosaccharides and disaccharides) and/or starch and/or oligomers or polysaccharides are used as inexpensive representatives of the polymers.

9. Process according to one or more of Claims 5 to 8, **characterized in that** the ceramic composition (2) is admixed with macroscopic threads or fibres (organic, thread-like molecules and/or polymers or natural fibres or fibres similar to natural fibres) to form the transport channels (7, 8).

10. Process according to one or more of Claims 5 to 9, **characterized in that** the shaped bodies (1) or the solid bodies (6) are cured and, if appropriate, carbonized by heating (firing).

11. Process according to Claim 10, **characterized in that** the relatively volatile decomposition products of the polymers and residue water are driven from the solid bodies (6) by further heating, resulting in formation of the pore and channel system (7 to 9) while the relatively non-volatile component of the polymer remains in the form of carbon.

12. Process according to one or more of Claims 5 to 11, **characterized in that** as many solid bodies (6) as desired are combined to form larger storage units (12).

13. Process according to Claim 5, **characterized in that** the dimensions of the channels (7) and pores (8) to be produced are appropriately determined via the diameter of the molecules to be introduced into the ceramic composition (2), via their length and their crosslinking.

## Revendications

1. Corps solide présentant une structure de pores et/ou de canaux accessible de l'extérieur, destiné à emmagasiner sous faible pression du gaz dans les pores et/ou les canaux, dont les diamètres sont de l'ordre du nm (nanomètre), **caractérisé en ce que** le corps solide (6) est formé d'une masse céramique (2) et que les parois intérieures du système de pores et de canaux (7 à 9) sont revêtues ou formées de carbone en tant que substance réactive, capable de fixation vis-à-vis du gaz à emmagasiner respectivement, la structure poreuse du corps solide consistant en une combinaison de micropores (9) à capacité de stockage, présentant des diamètres de l'ordre de 0,1 à 3,0 nm et de canaux de transport plus grands sous la forme de mésocanaux (8) et de macrocanaux (7).

2. Corps solide selon la revendication 1, **caractérisé en ce que** la masse (2) du corps solide (6) consiste en silicate et carbone pour la formation du système de pores et de canaux (7 à 9), avec une fraction pondérale d'au moins 50% de carbone ou de plus grandes fractions de carbone.

3. Corps solide selon les revendications 1 et 2, **caractérisé en ce que** la substance réactive (11) contient encore d'autres substances améliorant sa capacité de fixation vis-à-vis des gaz à emmagasiner.

4. Corps solide selon une ou plusieurs des revendications 1 à 3, **caractérisé en ce que** le corps solide (6) contient encore d'autres substances améliorant ses propriétés électriques, principalement sa conductibilité.

5. Procédé de préparation d'un corps solide selon une ou plusieurs des revendications 1 à 4, **caractérisé en ce que** dans une masse céramique du commerce (2), qui consiste par exemple en une poudre à base de nanoparticules, de silicate en feuillets ou minéraux argileux, on incorpore et on malaxe des polymères (3) (par exemple la gélatine) et/ou des protéines fibrillaires (4), manuellement ou mécaniquement, que la masse (2) est ensuite transférée dans des moules (1) appropriés, puis séchée ensuite par élimination de liquide pour former le corps solide (6).

6. Procédé selon la revendication 5, **caractérisé en ce qu'**une masse céramique (2), constituée de gel de silice, de minéraux argileux et de silicates en feuillets, est utilisée Jusqu' une température de traitement de 400°C.

7. Procédé selon la revendication 5, **caractérisé en ce que** l'on utilise comme masse céramique (2) de l'oxyde de cérium à des températures de traitement jusqu'à 1800°C.

8. Procédé selon une ou plusieurs des revendications 6 et 7, **caractérisé en ce que** l'on utilise des sucres (mono- ou disaccharides) et/ou des amidons et/ou des oligomères ou des polysaccharides en tant que représentants avantageux des polymères.

9. Procédé selon une ou plusieurs des revendications 5 à 8, **caractérisé en ce que**, pour la formation des canaux de transport (7, 8), la masse (2) est additionnée de fils ou de fibres macroscopiques (molécules organiques filiformes et/ou polymères ou fibres naturelles ou fibres analogues aux fibres naturelles).

10. Procédé selon une ou plusieurs des revendications 5 à 9, **caractérisé en ce que** les corps façonnés (1) ou les corps solides (6) sont durcis par chauffage (cuisson) et éventuellement carbonisés.

11. Procédé selon la revendication 10, **caractérisé en ce que**, par un chauffage subséquent, les produits de décomposition volatils des polymères, ainsi que l'eau résiduelle sont éliminés des corps solides (6), suite à quoi il se forme le système de pores et de canaux (7 à 9), tandis que les composants peu volatils des polymères subsistent sous forme de carbone.

12. Procédé selon une ou plusieurs des revendications 5 à 11, **caractérisé en ce que** l'on réunit une multiplicité arbitraire de corps solides (6) en unités de stockage plus grandes (12).

13. Procédé selon la revendication 5, **caractérisé en ce que**, via le diamètre des molécules à incorporer dans la masse (2), via leur longueur et leur réticulation, on détermine en conséquence les dimensions des canaux (7) et des pores (8) à réaliser.
